# EUROPEAN PATENT APPLICATION

(11) **EP 4 851 479 A1**
(43) Date of publication of application: **09.12.2026**
(21) Application number: 26183196.0
(22) Date of filing: 05.06.2026
(51) Int. Cl.: F16D 55/226, B60T 13/74, F16D 55/227, F16D 65/00, F16D 65/18, F16D 65/095, F16D 55/00, F16D 121/24

(54) **ELECTRO-MECHANICAL BRAKE APPARATUS AND VEHICLE**

(30) Priority: 06.06.2025 CN 202510756668
(71) Applicant: Huawei Technologies Co., Ltd., Shenzhen, Guangdong 518129 (CN)
(72) Inventor: HE, Yuhui, Shenzhen, 518129 (CN); WEI, Lishun, Shenzhen, 518129 (CN); ZHOU, Xin, Shenzhen, 518129 (CN)
(74) Representative: Isarpatent

(57) **Abstract**

This application provides an electro-mechanical brake apparatus and a vehicle. The electro-mechanical brake apparatus includes a caliper bracket and a caliper. The caliper bracket is fastened to a vehicle frame. The caliper bracket includes two pillars and two axial sleeves. The two pillars are arranged between the two axial sleeves. The two pillars are configured to slidably connect to one friction plate. The two axial sleeves are respectively sleeved on outer sides of two sliding pins. The caliper includes a frame-shaped caliper body and two pairs of feet. The frame-shaped caliper body is configured to fasten the other friction plate. The frame-shaped caliper body accommodates the one friction plate, the two pillars, and the other friction plate in a second direction. The two pairs of feet are respectively arranged on two sides of the frame-shaped caliper body in a first direction, and each pair of feet in the two pairs of feet is configured to support one sliding pin. The electro-mechanical brake apparatus provided in this application shortens a transfer path of a reactive force in a braking process to reduce a force exerted on the friction plate, thereby improving braking reliability while meeting miniaturization.

## Description

### TECHNICAL FIELD

This application relates to the field of vehicle technologies, and in particular, to an electro-mechanical brake apparatus and a vehicle.

### BACKGROUND

An electro-mechanical brake apparatus is configured to drive a friction plate to brake a brake disc. The friction plate needs to bear a large reactive force in a braking process. In a scenario in which dimensions of wheel space of a vehicle are limited, a structure of the electro-mechanical brake apparatus needs to be optimized, and a force condition of the friction plate needs to be improved, to improve braking reliability.

### SUMMARY

This application provides an electro-mechanical brake apparatus and a vehicle. The electro-mechanical brake apparatus shortens a transfer path of a reactive force in a braking process to reduce a force exerted on a friction plate, thereby improving braking reliability while meeting miniaturization.

According to a first aspect, this application provides an electro-mechanical brake apparatus, used to brake a wheel. The electro-mechanical brake apparatus includes a caliper bracket and a caliper, the caliper bracket is fastened to a vehicle frame, the caliper bracket is configured to connect to the caliper, the caliper bracket includes two pillars and two axial sleeves, the two pillars are arranged between the two axial sleeves in a first direction, the two pillars are configured to slidably connect to one friction plate, the two axial sleeves are respectively sleeved on outer sides of two sliding pins, a central axis of each of the two sliding pins is parallel to a central axis of a brake disc of the wheel, and the first direction is perpendicular to an axial direction of the brake disc. The caliper includes a frame-shaped caliper body and two pairs of feet, the frame-shaped caliper body is configured to connect to and support the other friction plate, in the axial direction of the brake disc, the other friction plate is arranged on a side that is of the brake disc and that is away from the one friction plate, the frame-shaped caliper body is configured to accommodate the one friction plate, the two pillars, and the other friction plate in a second direction, and the second direction is perpendicular to the first direction and the axial direction of the brake disc. The two pairs of feet are respectively arranged on two sides of the frame-shaped caliper body in the first direction, and each pair of feet in the two pairs of feet is configured to support one sliding pin.

The two friction plates of the electro-mechanical brake apparatus provided in this application are respectively mounted on the caliper bracket and the caliper. The caliper bracket is slidably connected to the caliper via two sliding pins. One friction plate mounted on the caliper bracket can be driven and slide toward the brake disc in the axial direction of the brake disc, and further drive the caliper to slide relative to the caliper bracket in an axial direction of the sliding pin, so as to drive the other friction plate to slide from the other side of the brake disc to the brake disc in the axial direction of the brake disc. The two friction plates can clamp the brake disc from two sides in the axial direction of the brake disc to implement braking.

In the electro-mechanical brake apparatus provided in this application, the frame-shaped caliper body is used in the caliper, the frame-shaped caliper body accommodates the two friction plates and the pillars of the caliper bracket in the second direction, and the frame-shaped caliper body is located on one side of the one friction plate in the axial direction of the brake disc, to facilitate mounting a drive component to drive the one friction plate. The frame-shaped caliper body is located on one side of the other friction plate in the axial direction of the brake disc, to better support the other friction plate. According to the electro-mechanical brake apparatus provided in this application, the two sliding pins are further arranged on the two sides of the frame-shaped caliper body, so that a reactive force exerted on the other friction plate in a braking process is transferred to the caliper bracket via a pair of feet. In this way, a transfer path of the reactive force on the other friction plate is short, force conditions of the other friction plate and the caliper can be improved, and reliability of the electro-mechanical brake apparatus is further improved.

The electro-mechanical brake apparatus provided in this application has a compact structure, and each component has high structural rigidity. Therefore, a large reactive force can be borne while a small overall volume is ensured, and braking effect of the electro-mechanical brake apparatus is ensured.

In an implementation, each of the two pillars includes a sliding groove and a positioning hole. Each pillar is configured to slidably connect to the one friction plate via the sliding groove, and each pillar is configured to be fastened to the vehicle frame via a bolt that passes through the positioning hole. In the second direction, each pillar includes a first end and a second end that are opposite to each other, the first end is arranged between the second end and the central axis of the brake disc, and the positioning hole is located between the first end and the sliding groove.

In this implementation, groove openings of the two sliding grooves are opposite to each other in the first direction, and the two pillars are configured to slidably connect to the one friction plate via the two sliding grooves. In the second direction, the sliding groove is close to the positioning hole and is linearly connected to the positioning hole via the pillar, so that a bending moment formed by a reactive force exerted on the one friction plate in the braking process can be reduced, and a force condition of the one friction plate can be improved.

In an implementation, the caliper bracket includes two support arms, and each of the two support arms is configured to be fastened to the first end of one pillar and one of the two axial sleeves. In the axial direction of the brake disc, a length of the axial sleeve is greater than a length of the support arm and greater than a length of the pillar. In the second direction, the axial sleeve is arranged between a center line of the friction plate in the first direction and the positioning hole.

In this implementation, each support arm is configured to connect to one axial sleeve, and the sliding pin is close to the positioning hole and is linearly connected to the positioning hole via the support arm, so that a bending moment formed by the reactive force that is on the other friction plate and that is transferred from the sliding pin in a braking process can be reduced, a path in which the reactive force of the other friction plate is transferred to the vehicle frame can be further shortened, and the force condition of the other friction plate can be further improved.

In an implementation, the axial sleeve is arranged between the sliding groove and the positioning hole in the second direction.

In an implementation, the caliper bracket includes a pair of first reinforcing ribs and a pair of second reinforcing ribs. Each first reinforcing rib in the pair of first reinforcing ribs is configured to connect a middle section of one pillar and one axial sleeve, and each second reinforcing rib in the pair of second reinforcing ribs is configured to connect a middle section of one pillar and the first end of the other pillar. In the second direction, an end part that is of the first reinforcing rib and that is connected to one pillar and an end part that is of the second reinforcing rib and that is connected to the same pillar are both located between the sliding groove and the positioning hole of the same pillar.

In this implementation, the first reinforcing rib is configured to improve rigidity of the axial sleeve to improve a force condition of the sliding pin, and the second reinforcing rib is configured to improve rigidity of connection between the two pillars to improve the force condition of the one friction plate. Because both the axial sleeve and the positioning hole are areas that are of the caliper bracket and that are subject to a large force, the first reinforcing rib and the second reinforcing rib may jointly function to increase an overall height of the caliper bracket. Therefore, the first reinforcing rib and the second reinforcing rib are connected to a same part of the pillar, and a corner point is formed at the part. The first reinforcing rib and the second reinforcing rib support the corner point from two sides in the first direction, so that overall structural stability of the pillar can be improved.

In an implementation, in the second direction, a distance between the end part that is of the first reinforcing rib and that is connected to the pillar and the positioning hole is equal to a distance between the end part that is of the second reinforcing rib and that is connected to the same pillar and the positioning hole.

In an implementation, in the second direction, a spacing between the end part that is of the first reinforcing rib and that is connected to the pillar and the sliding groove is approximately equal to a height of the support lug of the one friction plate relative to the bottom of the one friction plate.

In an implementation, the caliper bracket includes a pair of third reinforcing ribs, and each third reinforcing rib in the pair of third reinforcing ribs is configured to connect the second end of one pillar and one first reinforcing rib. In the first direction, a distance between an end part that is of one third reinforcing rib in the pair of third reinforcing ribs and that is connected to the closest first reinforcing rib and the axial sleeve is less than a distance between the end part that is of the third reinforcing rib and that is connected to the closest first reinforcing rib and a middle section of the pillar.

In this implementation, the third reinforcing rib is configured to improve rigidity of the second end of the pillar, thereby improving the force condition of the one friction plate. An end part that is of the third reinforcing rib and that is connected to the first reinforcing rib is closer to the axial sleeve, so that an angle at which the third reinforcing rib supports the second end can be increased, and structural stability of the pillar can be further improved.

In an implementation, each pair of feet includes a first foot and a second foot, the first foot and the second foot are spaced from each other on two sides of the axial sleeve in the axial direction of the brake disc, the first foot includes a first accommodating hole, the second foot includes a second accommodating hole, the first accommodating hole and the second accommodating hole are configured to accommodate and support one end of one sliding pin, and a middle section of one sliding pin is configured to pass through one axial sleeve.

In this implementation, the caliper fastens the sliding pin via two feet located on a same side of the frame-shaped caliper body, to reliably support the sliding pin. The caliper can slide relative to the axial sleeve via a gap between the first foot and the second foot, to drive the other friction plate to abut against the brake disc in the axial direction of the brake disc to implement braking.

In an implementation, in the axial direction of the brake disc, each sliding pin includes a threaded end and a countersunk end that are opposite to each other. The threaded end is configured to extend into the first accommodating hole and mesh with a hole wall of the first accommodating hole. The countersunk end is configured to extend into the second accommodating hole and abut against a hole wall of the second accommodating hole in a radial direction of the sliding pin.

In this implementation, the sliding pin is fastened to the first foot via the threaded end, to limit displacement of the sliding pin relative to the caliper in the axial direction of the brake disc. The sliding pin further extends into the second foot via the countersunk end, to reduce an axial size of the caliper. The countersunk end abuts against the hole wall of the second accommodating hole, to support the reactive force formed by the other friction plate.

In an implementation, an end face of the countersunk end includes a hexagonal socket in the axial direction of the brake disc. The hexagonal socket can bear a larger circumferential force, which helps secure meshing between the threaded end of the sliding pin and the hole wall of the first accommodating hole via the hexagonal socket.

In an implementation, in the axial direction of the brake disc, a length of the threaded end is less than a length of the first accommodating hole. A middle section of the sliding pin is configured to be partially embedded into the first accommodating hole and abut against the hole wall of the first accommodating hole in the radial direction of the sliding pin.

In this implementation, the first accommodating hole abuts against the middle section of the sliding pin in the radial direction, to support the reactive force formed by the other friction plate.

In an implementation, in the axial direction of the brake disc, a length of the countersunk end is less than a length of the second accommodating hole. A middle section of the sliding pin is configured to be partially embedded into the second accommodating hole. In the radial direction of the sliding pin, a gap between the second accommodating hole and the middle section of the sliding pin is configured to embed an expansion ring.

In this implementation, the expansion ring is configured to limit rotation of the sliding pin in the second accommodating hole, to prevent the sliding pin from displacing relative to the caliper in the axial direction of the brake disc.

In an implementation, in the radial direction of the sliding pin, a gap between the axial sleeve and the sliding pin is configured to embed two sliding bearings, and the two sliding bearings are respectively located at two ends of the axial sleeve in the axial direction of the brake disc.

In this implementation, the sliding bearing is configured to reduce a friction force between the sliding pin and the axial sleeve, to avoid wear of the sliding pin or the axial sleeve, thereby prolonging a service life of the electro-mechanical brake apparatus provided in this application.

In an implementation, in the axial direction of the brake disc, the frame-shaped caliper body includes a first side plate and a second side plate that are opposite to each other, the first side plate is configured to fasten one drive component, the second side plate is configured to fasten the other friction plate, the drive component is configured to drive the one friction plate to slide toward the brake disc and abut against the brake disc, and the drive component is configured to drive the caliper to slide relative to the caliper bracket and drive the other friction plate to abut against the brake disc.

In this implementation, in the axial direction of the brake disc, the frame-shaped caliper body is located on a side close to the one friction plate, to fasten the drive component, so that the drive component passes through the first side plate to drive the one friction plate to slide toward the brake disc and be in contact with the brake disc.

In an implementation, the drive component includes a brake motor, a reducer, and a screw nut. The brake motor and the reducer are fastened to the first side plate, and the screw nut is accommodated in a central hole of the first side plate. The brake motor is configured to drive the screw nut via the reducer, and the screw nut is configured to drive the one friction plate to slide in the axial direction of the brake disc.

In this implementation, the screw nut pushes the one friction plate from a central position of the first side plate, so that a force exerted on the one friction plate can be even, and uneven wear between the one friction plate and the brake disc can be avoided.

In an implementation, the first side plate includes two motor accommodating grooves, the two motor accommodating grooves are respectively arranged on two sides of the central hole in the first direction, one of the two motor accommodating grooves is configured to accommodate the brake motor, and in the axial direction of the brake disc, the reducer is fastened to a surface that is of the first side plate and that is away from the one friction plate.

In this implementation, the first side plate accommodates the brake motor by using space on a side that is of the screw nut and that is in the first direction, so that an overall volume of the electro-mechanical brake apparatus can be reduced. The motor accommodating grooves are respectively included on two sides of the screw nut in the first direction, so that when the electro-mechanical brake apparatus is mounted on a left wheel or a right wheel of the vehicle, an arrangement direction of the brake motor relative to the screw nut is adjusted.

In an implementation, in the axial direction of the brake disc, a surface that is of the second side plate and that faces the brake disc includes a positioning groove, and the positioning groove is configured to accommodate the other friction plate. In the axial direction of the brake disc, a groove depth of the positioning groove is less than a thickness of the other friction plate.

In this implementation, the other friction plate at least partially extends out of the positioning groove in the axial direction of the brake disc, to ensure that the other friction plate is in reliable contact with the brake disc, and implement braking.

In an implementation, the other friction plate includes two support lugs, the two support lugs are respectively arranged on two sides of a main structure of the other friction plate in the first direction, and a gap between a groove wall of the positioning groove and the two support lugs is less than a gap between the main structure of the other friction plate and the groove wall of the positioning groove in the second direction.

In this implementation, in the second direction, a part that is of the positioning groove and that is used to support the two support lugs has a larger length, to better support the other friction plate, and further improve the force condition of the other friction plate. Each of the one friction plate and the other friction plate includes a structure of support lugs, and shapes of the two friction plates are consistent. This can improve interchangeability and compatibility of the friction plates in the electro-mechanical brake apparatus.

In an implementation, the caliper includes an extension structure, and in the second direction, the extension structure is configured to seal a side that is of the frame-shaped caliper body and that is away from the central axis of the brake disc. The extension structure includes a hollow area, and in the second direction, the hollow area is configured to: penetrate the extension structure and be at least partially aligned with the other friction plate.

In this implementation, the extension structure of the caliper is configured to connect side plates of the frame-shaped caliper body from one side of the frame-shaped caliper body. This can improve overall structural rigidity of the frame-shaped caliper body, and does not affect assembly of the caliper and driving actions on the two friction plates. The hollow area is configured to provide an observable window for the second friction plate, to facilitate maintenance of the second friction plate.

According to a second aspect, this application provides a vehicle. The vehicle includes wheels and the electro-mechanical brake apparatus provided in any one of the foregoing implementations. The electro-mechanical brake apparatus is fastened to a vehicle frame of the vehicle, and the electro-mechanical brake apparatus is configured to brake a brake disc of the wheel. Because the electro-mechanical brake apparatus is used in the vehicle provided in this application, braking reliability is improved without increasing wheel space.

### BRIEF DESCRIPTION OF DRAWINGS

To describe technical solutions in this application more clearly, the following briefly describes accompanying drawings required for describing implementations. Clearly, the accompanying drawings in the following descriptions show merely some implementations of this application, and a person of ordinary skill in the art may still derive other drawings from these accompanying drawings without creative efforts.
FIG. 1 is a diagram of a structure of a vehicle at a wheel according to an embodiment of this application;
FIG. 2 is an exploded view of a structure of an electro-mechanical brake apparatus according to an embodiment of this application;
FIG. 3 is an exploded view of a partial structure of an electro-mechanical brake apparatus according to an embodiment of this application;
FIG. 4 is a diagram of a framework structure of an electro-mechanical brake apparatus according to an embodiment of this application;
FIG. 5 is a diagram of a force transfer path of an electro-mechanical brake apparatus in a braking process according to an embodiment of this application;
FIG. 6 is a diagram of a structure of a caliper in an electro-mechanical brake apparatus according to an embodiment of this application;
FIG. 7 is a diagram of a structure of a caliper in an electro-mechanical brake apparatus according to an embodiment of this application;
FIG. 8 is a cross-sectional view of a structure of a caliper in an electro-mechanical brake apparatus according to an embodiment of this application;
FIG. 9 is a diagram of a structure of a caliper bracket in an electro-mechanical brake apparatus according to an embodiment of this application;
FIG. 10 is a diagram of a structure of a caliper bracket in an electro-mechanical brake apparatus according to an embodiment of this application;
FIG. 11 is a cross-sectional view of a structure of a caliper bracket in an electro-mechanical brake apparatus according to an embodiment of this application; and
FIG. 12 is a cross-sectional view of a structure of a sliding pin in an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

This application provides an electro-mechanical brake apparatus. The electro-mechanical brake apparatus is used to brake a wheel, and includes a caliper bracket and a caliper, the caliper bracket is fastened to a vehicle frame, the caliper bracket is configured to connect to the caliper, the caliper bracket includes two pillars and two axial sleeves, the two pillars are arranged between the two axial sleeves in a first direction, the two pillars are configured to slidably connect to one friction plate, the two axial sleeves are respectively sleeved on outer sides of two sliding pins, a central axis of each of the two sliding pins is parallel to a central axis of a brake disc of the wheel, and the first direction is perpendicular to an axial direction of the brake disc. The caliper includes a frame-shaped caliper body and two pairs of feet, the frame-shaped caliper body is configured to connect to and support the other friction plate, in the axial direction of the brake disc, the other friction plate is arranged on a side that is of the brake disc and that is away from the one friction plate, the frame-shaped caliper body is configured to accommodate the one friction plate, the two pillars, and the other friction plate in a second direction, and the second direction is perpendicular to the first direction and the axial direction of the brake disc. The two pairs of feet are respectively arranged on two sides of the frame-shaped caliper body in the first direction, and each pair of feet in the two pairs of feet is configured to support one sliding pin. The electro-mechanical brake apparatus provided in this application has a compact structure, and each component has high structural rigidity. Therefore, a large reactive force can be borne while a small overall volume is ensured, and braking effect of the electro-mechanical brake apparatus is ensured.

This application provides a vehicle. The vehicle includes wheels and the electro-mechanical brake apparatus provided in any one of the foregoing implementations. The electro-mechanical brake apparatus is fastened to a vehicle frame of the vehicle, and the electro-mechanical brake apparatus is configured to brake a brake disc of the wheel. Because the electro-mechanical brake apparatus is used in the vehicle provided in this application, braking reliability is improved without increasing wheel space.

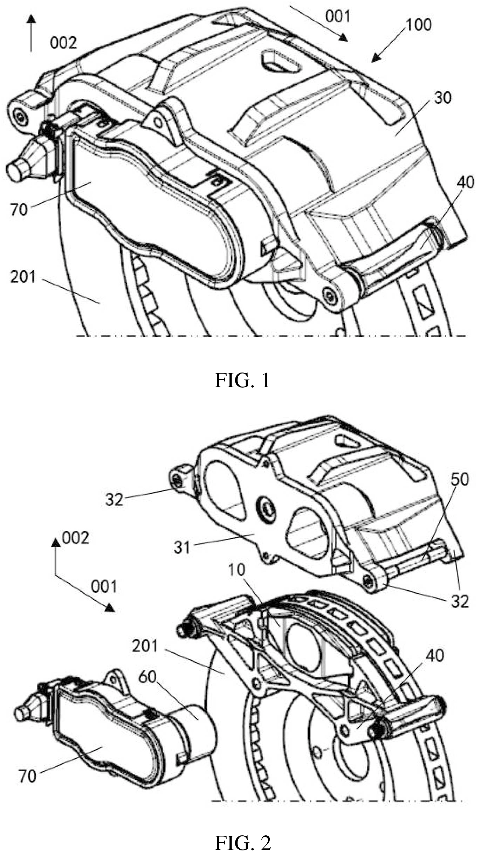

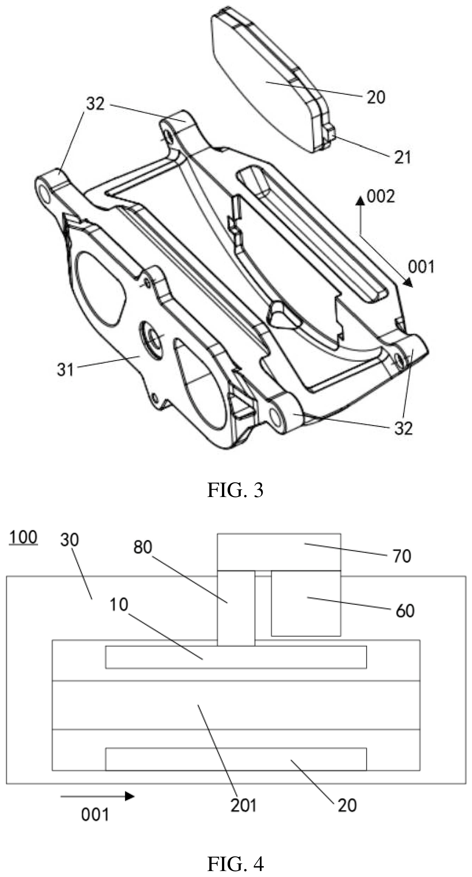

Refer to FIG. 1 to FIG. 4. FIG. 1 is a diagram of a structure of a vehicle at a wheel according to an embodiment of this application. FIG. 2 is an exploded view of a structure of an electro-mechanical brake apparatus 100 according to this embodiment of this application. FIG. 3 is an exploded view of a partial structure of the electro-mechanical brake apparatus 100 according to this embodiment of this application. FIG. 4 is a diagram of a framework structure of the electro-mechanical brake apparatus 100 according to this embodiment of this application.

This application provides an electro-mechanical brake apparatus 100. The electro-mechanical brake apparatus 100 includes two friction plates, a caliper bracket 40, and a caliper 30. The caliper bracket 40 is fastened to a vehicle frame, and the caliper bracket 40 is configured to connect to the caliper 30. The two friction plates are respectively mounted on the caliper 30 and the caliper bracket 40, and the two friction plates are respectively arranged on two sides of a brake disc 201 in an axial direction of the brake disc 201. The caliper 30 moves relative to the caliper bracket 40 to drive the two friction plates to slide relative to each other, so as to brake the brake disc 201.

The caliper bracket 40 includes two pillars 41 and two axial sleeves 42. The two pillars 41 are arranged between the two axial sleeves 42 in a first direction 001, and the two pillars 41 are configured to slidably connect to one friction plate. In this embodiment of this application, the first direction 001 is perpendicular to the axial direction of the brake disc 201. The one friction plate that is in the two friction plates and that is connected between the two pillars 41 is defined as a first friction plate 10. Therefore, the two pillars 41 of the caliper bracket 40 are respectively arranged on two sides of the first friction plate 10 in the first direction 001, and the two pillars 41 are configured to slidably connect to the first friction plate 10.

In the first direction 001, each of the two axial sleeves 42 is arranged on a side that is of one pillar 41 and that is away from the first friction plate 10. The two axial sleeves 42 are respectively sleeved on outer sides of the two sliding pins 50, and a central axis of each of the two sliding pins 50 is parallel to a central axis of the brake disc 201 of a wheel. Therefore, the two sliding pins 50 are slidably connected to the caliper bracket 40 along the central axis of the brake disc 201 via the two axial sleeves 42.

The caliper 30 includes a frame-shaped caliper body 31 and two pairs of feet 32. The frame-shaped caliper body 31 is configured to fasten the other friction plate. In this embodiment of this application, the other friction plate that is in the two friction plates and that is fastened to the frame-shaped caliper body 31 is defined as a second friction plate 20. In the axial direction of the brake disc 201, the second friction plate 20 is arranged on a side that is of the brake disc 201 and that is away from the first friction plate 10. In other words, in the axial direction of the brake disc 201, the first friction plate 10, the brake disc 201, and the second friction plate 20 are sequentially spaced from each other.

The frame-shaped caliper body 31 is configured to accommodate the first friction plate 10, the two pillars 41, and the second friction plate 20 in a second direction 002, where the second direction 002 is perpendicular to the first direction 001 and the axial direction of the brake disc 201. As shown in FIG. 4, the frame-shaped caliper body 31 is approximately of a rectangular hollow structure, and the frame-shaped caliper body 31 includes an inner cavity that penetrates in the second direction 002. The inner cavity is configured to accommodate the first friction plate 10, the two pillars 41, and the second friction plate 20. Alternatively, the frame-shaped caliper body 31 surrounds peripheries of the first friction plate 10, the two pillars 41, and the second friction plate 20 in the second direction 002.

The two pairs of feet 32 are respectively arranged on two sides of the frame-shaped caliper body 31 in the first direction 001, and each pair of feet 32 in the two pairs of feet 32 is configured to support one sliding pin 50. In an embodiment, each pair of feet 32 in the caliper 30 is configured to be fastened to one sliding pin 50. Because the two sliding pins 50 are slidably connected to the caliper bracket 40 in the central axis direction of the brake disc 201, the caliper 30 is slidably connected to the caliper bracket 40 in the axial direction of the brake disc 201 via the two pairs of feet 32. The caliper 30 can slide relative to the brake disc 201 and push the first friction plate 10 and the second friction plate 20 to slide relative to each other. The first friction plate 10 and the second friction plate 20 are in contact with the brake disc 201 and generate friction forces to brake the brake disc 201.

The two friction plates of the electro-mechanical brake apparatus 100 provided in this application are respectively mounted on the caliper bracket 40 and the caliper 30. The caliper bracket 40 is slidably connected to the caliper 30 via the two sliding pins 50. The first friction plate 10 mounted on the caliper bracket 40 can be driven and slide toward the brake disc 201 in the axial direction of the brake disc 201, and further drive the caliper 30 to slide relative to the caliper bracket 40 in an axial direction of the sliding pin 50, so as to drive the second friction plate 20 to slide from the other side of the brake disc 201 to the brake disc 201 in the axial direction of the brake disc 201. The two friction plates can clamp the brake disc 201 from two sides in the axial direction of the brake disc 201 to implement braking.

In the electro-mechanical brake apparatus 100 provided in this application, the frame-shaped caliper body 31 is used in the caliper 30, the frame-shaped caliper body 31 accommodates the two friction plates and the pillars 41 of the caliper bracket 40 in the second direction 002, and a structure in which the frame-shaped caliper body 31 is located on one side of the first friction plate 10 in the axial direction of the brake disc 201 facilitates mounting a drive component to drive the first friction plate 10. A structure in which the frame-shaped caliper body 31 is located on one side of the second friction plate 20 in the axial direction of the brake disc 201 can better support the second friction plate 20. According to the electro-mechanical brake apparatus 100 provided in this application, the two sliding pins 50 are further arranged on the two sides of the frame-shaped caliper body 31, so that a reactive force exerted on the second friction plate 20 in a braking process is transferred to the caliper bracket 40 via a pair of feet 32. In this way, a transfer path of the reactive force on the second friction plate 20 is short, force conditions of the second friction plate 20 and the caliper 30 can be improved, and reliability of the electro-mechanical brake apparatus 100 is further improved.

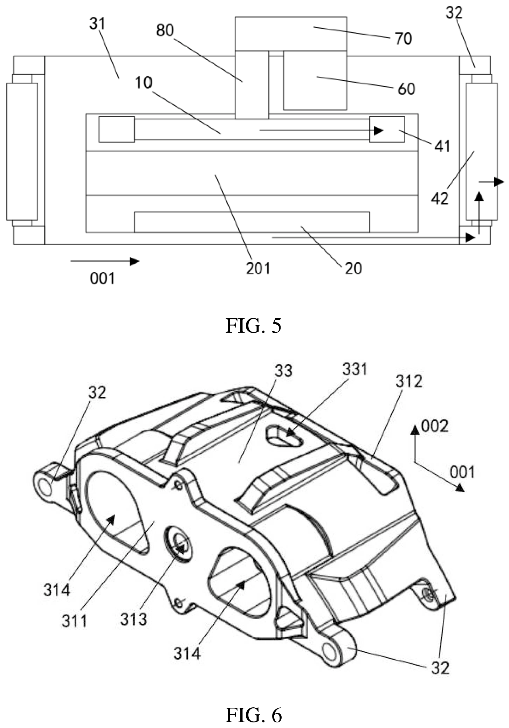

Refer to FIG. 5. FIG. 5 is a diagram of a force transfer path of the electro-mechanical brake apparatus 100 provided in this application in a braking process.

As shown in FIG. 5, a rotation direction of the brake disc 201 is defined as rotating from one side to the other side in the first direction 001. In this case, after the first friction plate 10 and the second friction plate 20 are in contact with the brake disc 201, the formed friction forces are the same in direction, and both face one side in the first direction 001. However, reactive forces of friction forces exerted by the brake disc 201 on the first friction plate 10 and the second friction plate 20 face the other side in the first direction 001. Because the first friction plate 10 is slidably connected to the pillar 41, the reactive force exerted on the first friction plate 10 is transferred to the caliper bracket 40 via the pillar 41 located on the other side, and then is transferred to the vehicle frame via the caliper bracket 40. Therefore, a transfer path of the entire reactive force is short.

The reactive force exerted on the second friction plate 20 is first transferred to the frame-shaped caliper body 31, and then is transferred, via the pair of feet 32 located on the other side of the frame-shaped caliper body 31 in the first direction 001, to the sliding pin 50 correspondingly connected to the pair of feet 32. The sliding pin 50 transfers the reactive force to the caliper bracket 40 via the axial sleeve 42 sleeved on the outer side, and then transfers the reactive force to the vehicle frame. Because the second friction plate 20 is fastened to the frame-shaped caliper body 31 and is spaced from with the pair of feet 32 in the first direction 001, the reactive force that is exerted on the second friction plate 20 and that is transferred in the first direction 001 may be directly transferred to the caliper bracket 40 via the pair of feet 32 and the sliding pin 50 that are on one side. The transfer path of the reactive force on the second friction plate 20 is also correspondingly shortened, a transfer direction of the force is approximately in the first direction 001, and the force conditions of the second friction plate 20 and the caliper 30 are also improved.

It may be understood that, when the electro-mechanical brake apparatus 100 provided in this application is mounted on a wheel on the other side of the vehicle, reactive forces exerted on the first friction plate 10 and the second friction plate 20 in a braking process of the electro-mechanical brake apparatus 100 are also transferred to the vehicle frame in an opposite direction along similar transfer paths. The transfer paths of the reactive forces on the first friction plate 10 and the second friction plate 20 are also short, and a force condition is improved.

The electro-mechanical brake apparatus 100 provided in this application has a compact structure, and each component has high structural rigidity. Therefore, a large reactive force can be borne while a small overall volume is ensured, and braking effect of the electro-mechanical brake apparatus 100 is ensured. Because the electro-mechanical brake apparatus 100 is used in the vehicle provided in this application, braking reliability is improved without increasing wheel space.

A caliper bracket in the current technology includes two U-shaped brackets, and the two U-shaped brackets are respectively configured to mount two friction plates. One of the two U-shaped brackets is configured to connect to a vehicle frame, and is configured to fasten the other U-shaped bracket via a connection structure arranged on an outer side of a brake disc. One U-shaped bracket is configured to support one friction plate, and the other U-shaped bracket is configured to support the other friction plate. In this case, the other U-shaped bracket and the connection structure form a cantilever beam as a whole. The connection structure is further used as an axial sleeve to fasten a sliding pin.

A caliper in the current technology is a U-shaped caliper. Two bridges of the U-shaped caliper are connected to each other via a link bar. The two bridges are respectively arranged on two sides of the two U-shaped brackets in an axial direction of the brake disc. One bridge located on one side of one U-shaped bracket is configured to fasten a drive component, and the other bridge located on the other U-shaped bracket is configured to drive the other friction plate to slide.

In an electro-mechanical brake apparatus in the current technology, in a braking process, a reactive force exerted on the other friction plate is successively transferred to the vehicle frame via the other U-shaped bracket, the connection structure, and the one U-shaped bracket. A transfer path of the reactive force is long, and a bending moment formed after multiple times of bending and direction changing is increased.

For the caliper bracket in the current technology, in the braking process, both a maximum stress value and a minimum stress value of the caliper bracket are large, and stress at corners of the two U-shaped brackets and positions connected to the connection structure is approximately in a large range. A maximum displacement of the caliper bracket provided in the current technology in the braking process is also large.

In the solution provided in this application, under a same boundary condition as that of the caliper bracket in the current technology and with a same reactive force exerted, a maximum stress value of the electro-mechanical brake apparatus 100 provided in this application in the braking process is greatly reduced, and a minimum stress value of the electro-mechanical brake apparatus 100 in the braking process is also greatly improved. A force condition of the electro-mechanical brake apparatus 100 provided in this application is greatly improved. A maximum displacement of the electro-mechanical brake apparatus 100 provided in this application in the braking process is also greatly reduced, and the electro-mechanical brake apparatus 100 provided in this application is greatly improved compared with the electro-mechanical brake apparatus in the current technology.

In addition, because the U-shaped caliper in the current technology is subject to reactive forces transferred by the two friction plates, an opening between the two bridges is enlarged, resulting in uneven wear of the two friction plates. In the solution provided in this application, the frame-shaped caliper body 31 is used, and the frame-shaped caliper body 31 forms a continuous surrounding shape along a closed curve. This eliminates a cantilever beam structure of the two bridges of the caliper in the current technology, better supports the two friction plates, and can greatly reduce the uneven wear of the two friction plates.

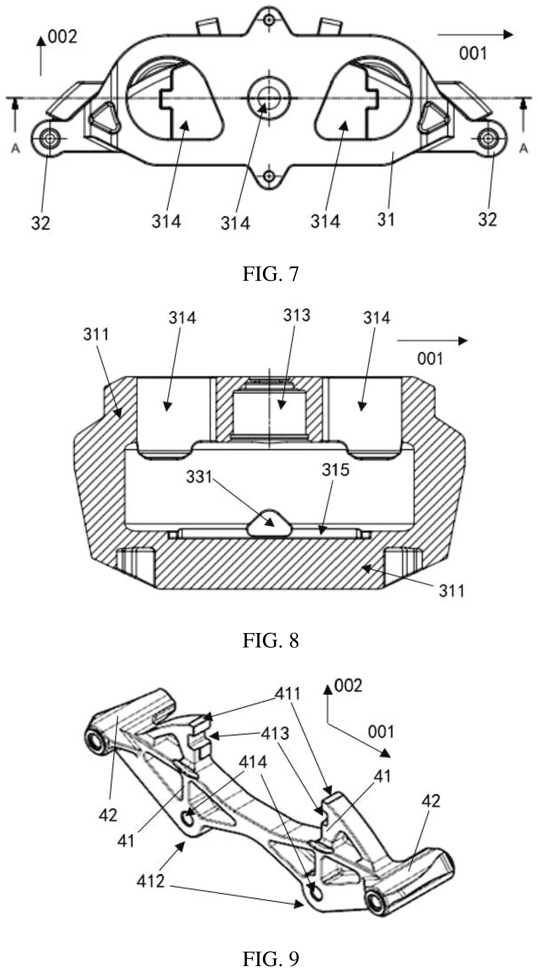

Refer to FIG. 6 to FIG. 8. FIG. 6 is a diagram of a structure of the caliper 30 in the electro-mechanical brake apparatus 100 according to this embodiment of this application. FIG. 7 is a diagram of a structure of the caliper 30 in the electro-mechanical brake apparatus 100 according to this embodiment of this application. FIG. 8 is a cross-sectional view of a structure of the caliper 30 in the electro-mechanical brake apparatus 100 according to this embodiment of this application.

In an embodiment, the caliper 30 is configured to fasten a drive component. The drive component is configured to drive the first friction plate 10 to slide toward the brake disc 201 and abut against the brake disc 201. The drive component is configured to: drive the caliper 30 to slide relative to the caliper bracket 40, and drive the second friction plate 20 to abut against the brake disc 201.

In this embodiment, the drive component is configured to: receive a braking signal, and output a braking force in response to the braking signal. A direction of the braking force of the drive component is approximately parallel to the axial direction of the brake disc 201. The braking force output by the drive component is used to push the first friction plate 10 to slide toward and be in contact with the brake disc 201 in the axial direction of the brake disc 201. The braking force output by the drive component is further used to push, via the first friction plate 10, the caliper 30 to slide toward one side of the drive component in the axial direction of the brake disc 201 relative to the caliper bracket 40, so as to drive the second friction plate 20 to slide toward and be in contact with the brake disc 201 in the axial direction of the brake disc 201. Therefore, the first friction plate 10 and the second friction plate 20 slide relative to each other and are in contact with the brake disc 201 to form friction forces.

In an embodiment, in the axial direction of the brake disc 201, the frame-shaped caliper body 31 includes a first side plate 311 and a second side plate 312 that are opposite to each other, the first side plate 311 is configured to fasten the drive component, and the second side plate 312 is configured to fasten the second friction plate 20. In an embodiment, a part of the drive component is fastened to a surface that is of the first side plate 311 and that is away from the brake disc 201 in the axial direction of the brake disc 201, and the other part of the drive component is accommodated in the first side plate 311. The second friction plate 20 is fastened to a surface that is of the second side plate 312 and that faces the brake disc 201 in the axial direction of the brake disc 201. Therefore, in the axial direction of the brake disc 201, the electro-mechanical brake apparatus 100 provided in this application has a small volume.

In this embodiment, in the axial direction of the brake disc 201, a structure in which the frame-shaped caliper body 31 is located on a side close to the first friction plate 10 is used to fasten the drive component, so that the other part of the drive component passes through the first side plate 311 to drive the first friction plate 10 to slide toward the brake disc 201 and be in contact with the brake disc 201.

In an embodiment, the drive component includes a brake motor 60, a reducer 70, and a screw nut 80. The brake motor 60 and the reducer 70 are fastened to the first side plate 311, and the screw nut 80 is accommodated in a central hole 313 of the first side plate 311. The brake motor 60 is configured to drive the screw nut 80 via the reducer 70, and the screw nut 80 is configured to drive the first friction plate 10 to slide in the axial direction of the brake disc 201.

In this embodiment, the screw nut 80 pushes the first friction plate 10 from a central position of the first side plate 311, so that a force exerted on the first friction plate 10 can be even, and uneven wear between the first friction plate 10 and the brake disc 201 can be avoided.

In an embodiment, the brake motor 60 includes a motor control unit, the brake motor 60 receives the braking signal via the motor control unit, and the motor control unit is configured to control the brake motor 60 to output the braking force. The reducer 70 is configured to: receive the braking force and adjust a rotation speed to increase torque, so as to drive a screw or nut of the screw nut 80 to rotate. The nut or screw of the screw nut 80 generates displacement parallel to the axial direction of the brake disc 201 in the first side plate 311, and pushes the first friction plate 10 to slide in the axial direction of the brake disc 201.

In an embodiment, the first side plate 311 includes two motor accommodating grooves 314, the two motor accommodating grooves 314 are respectively arranged on two sides of the central hole 313 in the first direction 001, one of the two motor accommodating grooves 314 is configured to accommodate the brake motor 60, and in the axial direction of the brake disc 201, the reducer 70 is fastened to a surface that is of the first side plate 311 and that is away from the first friction plate 10.

In this embodiment, the first side plate 311 accommodates the brake motor 60 by using space on a side that is of the screw nut 80 and that is in the first direction 001. In other words, the other part that is of the drive component and that is accommodated in the first side plate 311 further includes a partial structure of the brake motor 60. The brake motor 60 and the screw nut 80 are spaced from each other in the first direction 001. The reducer 70 is configured to transfer the braking force output by the brake motor 60 to the screw nut 80. In this way, an overall volume of the electro-mechanical brake apparatus 100 in the axial direction of the brake disc 201 can be reduced. The motor accommodating grooves 314 are respectively included on two sides of the screw nut 80 in the first direction 001, so that when the electro-mechanical brake apparatus 100 is mounted on a left wheel or a right wheel of the vehicle, an arrangement direction of the brake motor 60 relative to the screw nut 80 is adjusted. In this way, the electro-mechanical brake apparatus 100 provided in this application can adapt to different wheel space structures of the left wheel and the right wheel.

In an embodiment, in the axial direction of the brake disc 201, a surface that is of the second side plate 312 and that faces the brake disc 201 includes a positioning groove 315, and the positioning groove 315 is configured to accommodate the second friction plate 20. In the axial direction of the brake disc 201, a groove depth of the positioning groove 315 is less than a thickness of the second friction plate 20.

In this embodiment, in the axial direction of the brake disc 201, the second friction plate 20 is fastened to a side that is of the second side plate 312 and that faces the brake disc 201. When the frame-shaped caliper body 31 slides toward the brake disc 201 in the axial direction of the brake disc 201, the second friction plate 20 is configured to be in contact with the brake disc 201 to form the friction force. The second friction plate 20 at least partially extends out of the positioning groove 315 in the axial direction of the brake disc 201, to ensure that the second friction plate 20 is in reliable contact with the brake disc 201, implement braking, and avoid that the second side plate 312 is in contact with the brake disc 201 earlier than the second friction plate 20.

In an embodiment, the second friction plate 20 includes two support lugs 21, the two support lugs 21 are respectively arranged on two sides of a main structure of the second friction plate 20 in the first direction 001, and the two support lugs 21 are configured to be embedded into the second side plate 312 together with the main structure of the second friction plate 20. The two support lugs 21 may abut against a groove wall of the positioning groove 315 in the second direction 002, to prevent the second friction plate 20 and the second side plate 312 from rotating relative to each other.

In an embodiment, in the second direction 002, a gap between the groove wall of the positioning groove 315 and the two support lugs 21 is less than a gap between the main structure of the second friction plate 20 and the groove wall of the positioning groove 315.

In this embodiment, in the second direction 002, a size of an opening that is of the positioning groove 315 and that is used to accommodate the main structure of the second friction plate 20 is large; and in the second direction 002, a size of an opening that is of the positioning groove 315 and that is used to accommodate the two support lugs 21 is small. Correspondingly, for a structure of the second side plate 312, in the second direction 002, a part that is of the second side plate 312 and that is used to support the two support lugs 21 has a larger length, and the second side plate 312 can better support the second friction plate 20. Therefore, the gap between the groove wall of the positioning groove 315 and the two support lugs 21 is less than the gap between the main structure of the second friction plate 20 and the groove wall of the positioning groove 315. This can ensure that the two support lugs 21 abut against the groove wall of the positioning groove 315 in the second direction 002, and the main structure of the second friction plate 20 is mainly used to abut against the brake disc 201. In this way, a force condition of the second friction plate 20 can be improved.

In an embodiment, each of the second friction plate 20 and the first friction plate 10 includes a structure of support lugs 21, and shapes of the two friction plates are consistent. In other words, the second friction plate 20 may be slidably mounted between the two pillars 41, or the first friction plate 10 may be embedded into the positioning groove 315. Shapes of the first friction plate 10 and the second friction plate 20 are consistent. This can improve interchangeability and compatibility of the friction plates in the electro-mechanical brake apparatus 100.

In an embodiment, the caliper 30 includes an extension structure 33. In the second direction 002, the extension structure 33 is configured to seal a side that is of the frame-shaped caliper body 31 and that is away from the central axis of the brake disc 201. As mentioned above, the frame-shaped caliper body 31 of the caliper 30 is approximately of the rectangular hollow structure, and the frame-shaped caliper body 31 includes the inner cavity that penetrates in the second direction 002. However, in this embodiment, the extension structure 33 of the caliper 30 is configured to shield the inner cavity of the frame-shaped caliper body 31 in the second direction 002. The extension structure 33 is connected to side plates of the frame-shaped caliper body 31 from one side that is of the frame-shaped caliper body 31 and that is away from the brake disc 201, so that the side plates of the frame-shaped caliper body 31 are connected as a whole. This can improve overall structural rigidity of the frame-shaped caliper body 31, improve a force condition of the frame-shaped caliper body 31, and avoid deformation of the frame-shaped caliper body 31. The extension structure 33 does not affect assembly of the caliper 30 and driving actions on the two friction plates.

In an embodiment, the extension structure 33 includes a hollow area 331. In the second direction 002, the hollow area 331 is configured to: penetrate the extension structure 33 and be at least partially aligned with the second friction plate 20. In this embodiment, the hollow area 331 is configured to provide an observable window for the second friction plate 20, to facilitate maintenance of the second friction plate 20.

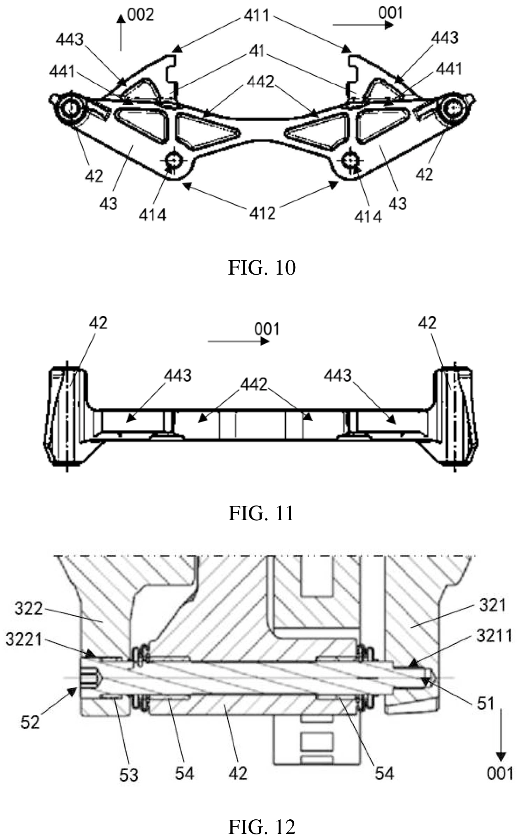

Refer to FIG. 9 to FIG. 11. FIG. 9 is a diagram of a structure of the caliper bracket 40 in the electro-mechanical brake apparatus 100 according to this embodiment of this application. FIG. 10 is a diagram of a structure of the caliper bracket 40 in the electro-mechanical brake apparatus 100 according to this embodiment of this application. FIG. 11 is a cross-sectional view of a structure of the caliper bracket 40 in the electro-mechanical brake apparatus 100 according to this embodiment of this application.

In an embodiment, each of the two pillars 41 includes a sliding groove 413 and a positioning hole 414. Each pillar 41 is configured to slidably connect to the first friction plate 10 via the sliding groove 413, and each pillar 41 is configured to be fastened to the vehicle frame via a bolt that passes through the positioning hole 414. In the second direction 002, each pillar 41 includes a first end 411 and a second end 412 that are opposite to each other, the first end 411 is arranged between the second end 412 and the central axis of the brake disc 201, and the positioning hole 414 is located between the first end 411 and the sliding groove 413.

In this embodiment, groove openings of the two sliding grooves 413 are opposite to each other in the first direction 001, and the two pillars 41 are configured to slidably connect to the first friction plate 10 via the two sliding grooves 413. Two support lugs of the first friction plate 10 are configured to be respectively embedded into the two sliding grooves 413. The reactive force exerted on the first friction plate 10 in the braking process is transferred to the pillar 41 through the sliding groove 413 on one side, and then is transferred to the vehicle frame through the positioning hole 414 of the pillar 41. A distance that is between the sliding groove 413 and the positioning hole 414 and that is in the second direction 002 is short. The pillar 41 extends approximately in the second direction 002 and forms a structure of the sliding groove 413 and the positioning hole 414, so that a bending moment formed by the reactive force exerted on the first friction plate 10 in the braking process can be reduced, and a force condition of the first friction plate 10 can be improved.

In an embodiment, the caliper bracket 40 includes two support arms 43, and each of the two support arms 43 is configured to be fastened to the first end 411 of one pillar 41 and one of the two axial sleeves 42. In the axial direction of the brake disc 201, a length of the axial sleeve 42 is greater than a length of the support arm 43, and the length of the axial sleeve 42 is further greater than a length of the pillar 41. In the second direction 002, the axial sleeve 42 is arranged between a center line of the first friction plate 10 in the first direction 001 and the positioning hole. In an embodiment, the axial sleeve 42 is arranged between the sliding groove 413 and the positioning hole 414.

In the foregoing two embodiments, each support arm 43 is configured to connect one axial sleeve 42 and a first end 411 of one pillar 41. The support arm 43 extends approximately along a straight line, and the sliding pin 50 is close to the positioning hole 414 and is linearly connected to the positioning hole via the support arm 43, so that a bending moment formed by a reactive force that is on the second friction plate 20 and that is transferred from the sliding pin 50 in the braking process can be reduced. After the reactive force on the second friction plate 20 is transferred to the axial sleeve 42 via the sliding pin 50, the reactive force may be directly transferred to the positioning hole 414 via the support arm 43 and further transferred to the path of the vehicle frame, thereby further shortening the transfer path of the reactive force exerted on the second friction plate 20, and improving the force condition of the second friction plate 20.

In an embodiment, the caliper bracket 40 includes a pair of first reinforcing ribs 441 and a pair of second reinforcing ribs 442. Each first reinforcing rib 441 in the pair of first reinforcing ribs 441 is configured to connect a middle section of one pillar 41 and one axial sleeve 42, and each second reinforcing rib 442 in the pair of second reinforcing ribs 442 is configured to connect a middle section of one pillar 41 and a first end 411 of the other pillar 41. In the second direction 002, an end part that is of the first reinforcing rib 441 and that is connected to the pillar 41 and an end part that is of the second reinforcing rib 442 and that is connected to the same pillar 41 are both located between the sliding groove 413 and the positioning hole 414 of the pillar 41.

In this embodiment, the first reinforcing rib 441 is configured to improve rigidity of the axial sleeve 42 to improve a force condition of the sliding pin 50, and the second reinforcing rib 442 is configured to improve rigidity of connection between the two pillars 41 to improve the force condition of the first friction plate 10. Because both the axial sleeve 42 and the positioning hole 414 are areas that are of the caliper bracket 40 and that are subject to a large force, the first reinforcing rib 441 and the second reinforcing rib 442 may jointly function to increase an overall height of the caliper bracket 40.

In an embodiment, a distance between the end part that is of the first reinforcing rib 441 and that is connected to the pillar 41 and the positioning hole 414 is equal to a distance between the end part that is of the second reinforcing rib 442 and that is connected to the same pillar 41 and the positioning hole 414. Therefore, the first reinforcing rib 441 and the second reinforcing rib 442 are connected to a same part of the pillar 41, and a corner point is formed at the part. The first reinforcing rib 441 and the second reinforcing rib 442 support the corner point from two sides in the first direction 001, so that overall structural stability of the pillar 41 can be improved.

In an embodiment, in the second direction 002, a spacing between the end part that is of the first reinforcing rib 441 and that is connected to the pillar 41 and the sliding groove 413 is approximately equal to a height of the support lug 21 of the first friction plate 10 relative to the bottom of the first friction plate 10.

In an embodiment, the caliper bracket 40 includes a pair of third reinforcing ribs 443, and each third reinforcing rib 443 in the pair of third reinforcing ribs 443 is configured to connect a second end 412 of one pillar 41 and one first reinforcing rib 441. In the first direction 001, a distance between an end part that is of one third reinforcing rib 443 in the pair of third reinforcing ribs 443 and that is connected to the closest first reinforcing rib 441 and the axial sleeve 42 is less than a distance between the end part that is of the third reinforcing rib 443 and that is connected to the closest first reinforcing rib 441 and a middle section of the pillar 41.

In this embodiment, the third reinforcing rib 443 is configured to improve rigidity of the second end 412 of the pillar 41, thereby improving the force condition of the first friction plate 10. An end part that is of the third reinforcing rib 443 and that is connected to the first reinforcing rib 441 is closer to the axial sleeve 42, so that an angle at which the third reinforcing rib 443 supports the second end 412 can be increased, and structural stability of the pillar 41 can be further improved.

Refer to FIG. 12. FIG. 12 is a cross-sectional view of a structure of the sliding pin 50 in the electro-mechanical brake apparatus 100 according to this embodiment of this application.

In an embodiment, each pair of feet 32 includes a first foot 321 and a second foot 322. The first foot 321 and the second foot 322 are spaced from each other on two sides of the axial sleeve 42 in the axial direction of the brake disc 201. The first foot 321 includes a first accommodating hole 3211, and the second foot 322 includes a second accommodating hole 3221. The first accommodating hole 3211 and the second accommodating hole 3221 are configured to accommodate and support one end of one sliding pin 50, and a middle section of the sliding pin 50 is configured to pass through the axial sleeve 42.

In this embodiment, the caliper 30 fastens and supports the sliding pin 50 via the first foot 321 and the second foot 322 that are located on a same side of the frame-shaped caliper body 31. In the axial direction of the brake disc 201, the first foot 321 and the second foot 322 are respectively configured to support two end parts of the sliding pin 50, to reliably support and fasten the sliding pin 50. In the axial direction of the brake disc 201, a spacing between the first foot 321 and the second foot 322 is greater than the length of the axial sleeve 42. The caliper 30 can slide relative to the axial sleeve 42 via the spacing between the first foot 321 and the second foot 322, to drive the second friction plate 20 to slide toward the brake disc 201 in the axial direction of the brake disc 201 and abut against the brake disc 201, so as to implement braking.

In an embodiment, in the axial direction of the brake disc 201, each sliding pin 50 includes a threaded end 51 and a countersunk end 52 that are opposite to each other. The threaded end 51 is configured to extend into the first accommodating hole 3211 and mesh with a hole wall of the first accommodating hole 3211. The countersunk end 52 is configured to extend into the second accommodating hole 3221 and abut against a hole wall of the second accommodating hole 3221 in a radial direction of the sliding pin 50.

In this embodiment, the sliding pin 50 is fastened to the first foot 321 via the threaded end 51, to limit displacement of the sliding pin 50 relative to the caliper 30 in the axial direction of the brake disc 201. The sliding pin 50 further extends into the second foot 322 via the countersunk end 52, to reduce an axial size of the caliper 30. The countersunk end 52 abuts against the hole wall of the second accommodating hole 3221, to support the reactive force formed by the second friction plate 20.

In an embodiment, an end face of the countersunk end 52 includes a hexagonal socket in the axial direction of the brake disc 201. The hexagonal socket can bear a larger circumferential force, which helps secure meshing between the threaded end 51 of the sliding pin 50 and the hole wall of the first accommodating hole 3211 via the hexagonal socket.

In an embodiment, in the axial direction of the brake disc 201, a length of the threaded end 51 is less than a length of the first accommodating hole 3211. A middle section of the sliding pin 50 is configured to be partially embedded into the first accommodating hole 3211 and abut against the hole wall of the first accommodating hole 3211 in the radial direction of the sliding pin 50.

In this embodiment, the first accommodating hole 3211 abuts against the middle section of the sliding pin 50 in the radial direction, to support the reactive force formed by the second friction plate 20.

In an embodiment, in the axial direction of the brake disc 201, a length of the countersunk end 52 is less than a length of the second accommodating hole 3221. A middle section of the sliding pin 50 is configured to be partially embedded into the second accommodating hole 3221. In the radial direction of the sliding pin 50, a gap between the second accommodating hole 3221 and the middle section of the sliding pin 50 is configured to embed an expansion ring 53.

In this embodiment, the expansion ring 53 is configured to limit rotation of the sliding pin 50 in the second accommodating hole 3221, to prevent the sliding pin 50 from displacing relative to the caliper 30 in the axial direction of the brake disc 201.

In an embodiment, in the radial direction of the sliding pin 50, a gap between the axial sleeve 42 and the sliding pin 50 is configured to embed two sliding bearings 54, and the two sliding bearings 54 are respectively located at two ends of the axial sleeve 42 in the axial direction of the brake disc 201.

In this embodiment, the sliding bearing 54 is configured to reduce a friction force between the sliding pin 50 and the axial sleeve 42, to avoid wear of the sliding pin 50 or the axial sleeve 42, thereby prolonging a service life of the electro-mechanical brake apparatus 100 provided in this application.

As shown in FIG. 12, the first foot 321 extends from the second side plate 312, and the second foot 322 extends from the first side plate 311. In the axial direction of the brake disc 201, the sliding pin 50 extends from one side of the first side plate 311, passes through the second foot 322, and then is in threaded connection to the first foot 321. In an embodiment, the first foot 321 extends from the first side plate 311, and the second foot 322 extends from the second side plate 312. In this case, directions of the threaded end 51 and the countersunk end 52 of the sliding pin 50 are exchanged relative to those in the embodiment in FIG. 12. To be specific, the sliding pin 50 extends from one side of the second side plate 312, passes through the second foot 322, and then is in threaded connection to the first foot 321. A manner of mounting the sliding pin 50 does not affect fit transmission between the sliding pin 50 and each of the caliper 30 and the axial sleeve 42.

It is clear that a person skilled in the art can make various modifications and variations to this application without departing from the protection scope of this application. This application is intended to cover these modifications and variations of this application provided that they fall within the scope of protection defined by the claims and their equivalent technologies.

## Claims

1. An electro-mechanical brake apparatus, wherein the electro-mechanical brake apparatus is used to brake a wheel, the electro-mechanical brake apparatus comprises a caliper bracket and a caliper, the caliper bracket is fastened to a vehicle frame, the caliper bracket is configured to connect to the caliper, the caliper bracket comprises two pillars and two axial sleeves, the two pillars are arranged between the two axial sleeves in a first direction, the space between the two pillars are configured to slidably connect to one friction plate, the two axial sleeves are respectively sleeved on outer sides of two sliding pins, a central axis of each of the two sliding pins is parallel to a central axis of a brake disc of the wheel, and the first direction is perpendicular to an axial direction of the brake disc;
the caliper comprises a frame-shaped caliper body and two pairs of feet, the frame-shaped caliper body is configured to connect to and support the other friction plate, in the axial direction of the brake disc, the other friction plate is arranged on a side that is of the brake disc and that is away from the one friction plate, the frame-shaped caliper body is configured to accommodate the one friction plate, the two pillars, and the other friction plate in a second direction, and the second direction is perpendicular to the first direction and the axial direction of the brake disc; and
the two pairs of feet are respectively arranged on two sides of the frame-shaped caliper body in the first direction, and each pair of feet in the two pairs of feet is configured to support one sliding pin.

2. The electro-mechanical brake apparatus according to claim 1, wherein each of the two pillars comprises a sliding groove and a positioning hole, each pillar is configured to slidably connect to the one friction plate via the sliding groove, and each pillar is configured to be fastened to the vehicle frame via a bolt that passes through the positioning hole; and
in the second direction, each pillar comprises a first end and a second end that are opposite to each other, the first end is arranged between the second end and the central axis of the brake disc, and the positioning hole is located between the first end and the sliding groove.

3. The electro-mechanical brake apparatus according to claim 2, wherein the caliper bracket comprises two support arms, and each of the two support arms is configured to be fastened to the first end of one pillar and one of the two axial sleeves;
in the axial direction of the brake disc, a length of the axial sleeve is greater than a length of the support arm and greater than a length of the pillar; and
in the second direction, the axial sleeve is arranged between a center line of the friction plate in the first direction and the positioning hole.

4. The electro-mechanical brake apparatus according to claim 2 or 3, wherein the caliper bracket comprises a pair of first reinforcing ribs and a pair of second reinforcing ribs, each first reinforcing rib in the pair of first reinforcing ribs is configured to connect a middle section of one pillar and one axial sleeve, and each second reinforcing rib in the pair of second reinforcing ribs is configured to connect a middle section of one pillar and the first end of the other pillar; and
in the second direction, an end part that is of the first reinforcing rib and that is connected to one pillar and an end part that is of the second reinforcing rib and that is connected to the same pillar are both located between the sliding groove and the positioning hole of the same pillar.

5. The electro-mechanical brake apparatus according to claim 4, wherein the caliper bracket comprises a pair of third reinforcing ribs, and each third reinforcing rib in the pair of third reinforcing ribs is configured to connect the second end of one pillar and one first reinforcing rib; and
in the first direction, a distance between an end part that is of one third reinforcing rib in the pair of third reinforcing ribs and that is connected to the closest first reinforcing rib and the axial sleeve is less than a distance between the end part that is of the third reinforcing rib and that is connected to the closest first reinforcing rib and a middle section of the pillar.

6. The electro-mechanical brake apparatus according to any one of claims 1 to 5, wherein each pair of feet comprises a first foot and a second foot, the first foot and the second foot are spaced from each other on two sides of the axial sleeve in the axial direction of the brake disc, the first foot comprises a first accommodating hole, the second foot comprises a second accommodating hole, the first accommodating hole and the second accommodating hole are configured to accommodate and fasten one end of one sliding pin, and a middle section of one sliding pin is configured to pass through one axial sleeve.

7. The electro-mechanical brake apparatus according to claim 6, wherein in the axial direction of the brake disc, each sliding pin comprises a threaded end and a countersunk end that are opposite to each other, the threaded end is configured to extend into the first accommodating hole and mesh with a hole wall of the first accommodating hole, and the countersunk end is configured to extend into the second accommodating hole and abut against a hole wall of the second accommodating hole in a radial direction of the sliding pin.

8. The electro-mechanical brake apparatus according to claim 7, wherein in the axial direction of the brake disc:
a length of the threaded end is less than a length of the first accommodating hole, and a middle section of the sliding pin is configured to be partially embedded into the first accommodating hole and abut against a hole wall of the first accommodating hole in the radial direction of the sliding pin; or
a length of the countersunk end is less than a length of the second accommodating hole, a middle section of the sliding pin is configured to be partially embedded into the second accommodating hole, and in the radial direction of the sliding pin, a gap between the second accommodating hole and the middle section of the sliding pin is configured to embed an expansion ring.

9. The electro-mechanical brake apparatus according to any one of claims 6 to 8, wherein in the radial direction of the sliding pin, a gap between the axial sleeve and the sliding pin is configured to embed two sliding bearings, and the two sliding bearings are respectively located at two ends of the axial sleeve in the axial direction of the brake disc.

10. The electro-mechanical brake apparatus according to any one of claims 1 to 9, wherein in the axial direction of the brake disc, the frame-shaped caliper body comprises a first side plate and a second side plate that are opposite to each other, the first side plate is configured to fasten one drive component, the second side plate is configured to fasten the other friction plate, the drive component is configured to drive the one friction plate to slide toward the brake disc and abut against the brake disc, and the drive component is configured to drive the caliper to slide relative to the caliper bracket and drive the other friction plate to abut against the brake disc.

11. The electro-mechanical brake apparatus according to claim 10, wherein the drive component comprises a brake motor, a reducer, and a screw nut, the brake motor and the reducer are fastened to the first side plate, the screw nut is accommodated in a central hole of the first side plate, the brake motor is configured to drive the screw nut via the reducer, and the screw nut is configured to drive the one friction plate to slide in the axial direction of the brake disc.

12. The electro-mechanical brake apparatus according to claim 11, wherein the first side plate comprises two motor accommodating grooves, the two motor accommodating grooves are respectively arranged on two sides of the central hole in the first direction, one of the two motor accommodating grooves is configured to accommodate the brake motor, and in the axial direction of the brake disc, the reducer is fastened to a surface that is of the first side plate and that is away from the one friction plate.

13. The electro-mechanical brake apparatus according to any one of claims 10 to 12, wherein in the axial direction of the brake disc, a surface that is of the second side plate and that faces the brake disc comprises a positioning groove, and the positioning groove is configured to accommodate the other friction plate;
in the axial direction of the brake disc, a groove depth of the positioning groove is less than a thickness of the other friction plate; and
the other friction plate comprises two support lugs, the two support lugs are respectively arranged on two sides of a main structure of the other friction plate in the first direction, and a gap between a groove wall of the positioning groove and the two support lugs is less than a gap between the main structure of the other friction plate and the groove wall of the positioning groove in the second direction.

14. The electro-mechanical brake apparatus according to any one of claims 1 to 13, wherein the caliper comprises an extension structure, and in the second direction, the extension structure is configured to seal a side that is of the frame-shaped caliper body and that is away from the central axis of the brake disc; and
the extension structure comprises a hollow area, and in the second direction, the hollow area is configured to: penetrate the extension structure and be at least partially aligned with the other friction plate.

15. A vehicle, wherein the vehicle comprises wheels and the electro-mechanical brake apparatus according to any one of claims 1 to 14, the electro-mechanical brake apparatus is fastened to a vehicle frame of the vehicle, and the electro-mechanical brake apparatus is configured to brake a brake disc of the wheel.
